# EUROPÄISCHE PATENTSCHRIFT

(11) **EP 4 341 133 B1**
(45) Veröffentlichungstag und Bekanntmachung des Hinweises auf die Patenterteilung: **04.02.2026**
(21) Anmeldenummer: 22723350.9
(22) Anmeldetag: 13.04.2022
(51) Int. Cl.: B60S 1/38, B60S 1/34

(54) **WISCHERVORRICHTUNG, CONNECTORELEMENT UND WISCHERSYSTEM**
WIPER DEVICE, CONNECTOR ELEMENT AND WIPER SYSTEM
DISPOSITIF D'ESSUIE-GLACE, ÉLÉMENT DE LIAISON ET SYSTÈME D'ESSUIE-GLACE

(30) Priorität: 19.05.2021 DE 102021205111
(43) Veröffentlichungstag der Anmeldung: 27.03.2024
(73) Patentinhaber: Robert Bosch GmbH, 70442 Stuttgart (DE)
(72) Erfinder: SMETS, Kris, 3545 Halen (BE); DEPONDT, Helmut, 3370 Boutersem (BE); BERTELS, Claus, 3000 Leuven (BE)
(86) Internationale Anmeldenummer: PCT/EP2022/059869
(87) Internationale Veröffentlichungsnummer: WO 2022/242965

(56) Entgegenhaltungen:
- EP-A1- 2 402 222
- EP-A1- 2 815 932
- WO-A1-2020/147994
- DE-A1- 102014 009 721
- DE-A1- 102014 114 691

## Beschreibung

### Stand der Technik

Es ist bereits eine Wischervorrichtung mit zumindest einem Wischblattadapter, welcher zumindest einen Adaptergrundkörper umfasst, welcher zumindest einen Adapterfluidfortsatz aufweist, welcher sich entlang einer Längsachse des Wischblattadapters erstreckt, und mit zumindest einer Fluidzuleitung zu einer Versorgung des Wischblattadapters mit einem Wischfluid, vorgeschlagen worden. Weiterer Stand der Technik ist aus der DE 10 2014 114691 A1 bekannt.

### Offenbarung der Erfindung

Die Erfindung geht aus von einer Wischervorrichtung mit zumindest einem Wischblattadapter, welcher zumindest einen Adaptergrundkörper umfasst, welcher zumindest einen Adapterfluidfortsatz aufweist, welcher sich entlang einer Längsachse des Wischblattadapters erstreckt, und mit zumindest einer Fluidzuleitung zu einer Versorgung des Wischblattadapters mit einem Wischfluid.

Es wird vorgeschlagen, dass die Wischervorrichtung zumindest ein Connectorelement zu einer Rastverbindung mit dem zumindest einen Adaptergrundkörper an dem zumindest einen Adapterfluidfortsatz aufweist, welches zumindest eine Verbindungsausnehmung zu einer Fluidverbindung mit dem zumindest einen Adapterfluidfortsatz aufweist und welches zumindest einen Connectorfluidfortsatz zu einer Verbindung mit der zumindest einen Fluidzuleitung aufweist.

Unter einer "Wischervorrichtung" soll vorzugsweise zumindest ein Teil, bevorzugt eine Unterbaugruppe, eines Scheibenwischers verstanden werden. Vorzugsweise kann die Wischervorrichtung auch den gesamten Scheibenwischer, insbesonddere mit einem Wischblatt, umfassen. Vorzugsweise ist die Wischervorrichtung zu einem Einsatz an einem Fahrzeug vorgesehen. Vorzugsweise ist die Wischervorrichtung, insbesondere als Teil des Scheibenwischers, zu einer Reinigung einer Fläche, bevorzugt einer Scheibe an einem Fahrzeug, vorgesehen. Vorzugsweise ist die Wischervorrichtung zu einer Reinigung einer Fahrzeugscheibe mit einem Fahrzeug, beispielsweise über einen Wischarm, gekoppelt. Unter "vorgesehen" soll vorzugsweise speziell eingerichtet, speziell ausgebildet, speziell ausgelegt und/oder speziell ausgestattet verstanden werden. Darunter, dass ein Objekt zu einer bestimmten Funktion vorgesehen ist, soll vorzugsweise verstanden werden, dass das Objekt diese bestimmte Funktion in zumindest einem Anwendungs- und/oder Betriebszustand erfüllt und/oder ausführt. Unter einem "Betriebszustand" soll vorzugsweise ein Zustand verstanden werden, in dem die Wischervorrichtung betriebsbereit für einen Wischvorgang und/oder einen Wischbetrieb ist und/oder zumindest mit einem Wischarm und/oder einem Wischblatt gekoppelt ist und/oder sich in einem Wischbetrieb befindet, in welchem eine Wischleisteneinheit der Wischervorrichtung, insbesondere des Scheibenwischers, bevorzugt über eine Fahrzeugscheibe geführt ist und dabei vorteilhaft an der Fahrzeugscheibe anliegt. Vorzugsweise ist die zumindest eine Fluidzuleitung als ein Schlauch ausgebildet. Vorzugsweise ist die zumindest eine Fluidzuleitung mit einem Fluidreservoir, insbesondere einem Wischflüssigkeitsreservoir, des Fahrzeugs verbunden. Vorzugsweise ist die zumindest eine Fluidzuleitung aus einem einzigen Material ausgebildet. Vorzugsweise weist die zumindest eine Fluidzuleitung ein Reservoirende auf, welches mit dem Fluidreservoir verbunden ist. Vorzugsweise weist die zumindest eine Fluidzuleitung ein Wischblattende auf, welches dazu vorgesehen ist, mit dem Connectorfluidfortsatz verbunden zu werden. Vorzugsweise ist die zumindest eine Fluidzuleitung frei von von dem Schlauch verschiedenen Bauteilen ausgebildet. Vorzugsweise ist der Wischblattadapter dazu ausgebildet, mit dem Wischarm, insbesondere mit dem Wischarmadapter, eine schwenkbare Verbindung einzugehen. Vorzugsweise ist der Wischblattadapter, bevorzugt der Adaptergrundkörper, dazu ausgebildet, mit einem Wischarmadapter, insbesondere dem Wischarm, schwenkbar zu verrasten. Vorzugsweise umfasst der Adaptergrundkörper zwei mechanische Verbindungselemente zu einer schwenkbaren Verbindung mit dem Wischarm, insbesondere dem Wischarmadapter, welche sich insbesondere auf einer gedachten Schwenkachse gegenüberliegend und einander zugewandt angeordnet sind.

Vorzugsweise ist der Wischblattadapter frei von einem elektrischen Verbindungselement ausgebildet. Alternativ kann der Wischblattadapter, insbesondere der Adaptergrundkörper, ein elektrisches Verbindungselement aufweisen. Vorzugsweise umfasst der Adaptergrundkörper zumindest einen, bevorzugt zumindest zwei, Fluidkanal/kanäle. Vorzugsweise umfasst der Adaptergrundkörper an einer Außenseite den Adapterfluidfortsatz, welcher den zumindest einen Fluidkanal insbesondere von der Außenseite aus zugänglich ausbildet. Vorzugsweise weist der zumindest eine Adaptergrundkörper eine Längsachse auf. Unter einer "Längsachse" eines Objekts soll insbesondere eine Achse verstanden werden, welche parallel zu einer längsten Kante eines kleinsten geometrischen, insbesondere gedachten, Quaders verläuft, welcher das Objekt gerade noch vollständig umschließt, und bevorzugt durch einen geometrischen Mittelpunkt des Objekts verläuft. Vorzugsweise ist der zumindest eine Adapterfluidfortsatz an einer Außenseite des Adaptergrundkörpers angeordnet, welche zumindest im Wesentlichen senkrecht zu der Längsachse des Adaptergrundkörpers ausgerichtet ist, insbesondere in Bezug auf den gedachten Quader. Vorzugsweise ist der zumindest eine Adapterfluidfortsatz an einer Außenseite des Adaptergrundkörpers angeordnet, welche ein Ende des Adaptergrundkörpers entlang der Längsachse des Adaptergrundkörpers bildet.

Vorzugsweise ist das Fluidreservoir durch die Fluidzuleitung und das Connectorelement mit dem Wischblattadapter, insbesondere dem Wischblatt, fluidisch verbindbar. Vorzugsweise weist das zumindest eine Connectorelement eine Längsachse auf. Vorzugsweise sind die Verbindungsausnehmung und der Adapterfluidfortsatz an verschiedenen Enden des zumindest einen Connectorelements entlang der Längsachse des zumindest einen Connectorelements angeordnet.

Vorzugsweise ist das zumindest eine Connectorelement zu einer Rastverbindung mit dem Adapterfluidfortsatz ausgebildet. Vorzugsweise ist das zumindest eine Connectorelement dazu ausgebildet, insbesondere speziell dazu geformt, mit der Verbindungsausnehmung auf den Adapterfluidfortsatz gesteckt zu werden zu der Rastverbindung des zumindest einen Connectorelements mit dem Adaptergrundkörper. Vorzugsweise begrenzt das zumindest eine Connectorelement in seinem Inneren zumindest einen Fluidkanal, welcher sich von der Verbindungsausnehmung durch den zumindest einen Connectorfluidfortsatz erstreckt.

Vorzugsweise weist das zumindest eine Connectorelement einen Connectorgrundkörper auf, welcher die Verbindungsausnehmung begrenzt. Vorzugsweise sind der Connectorgrundkörper und der Adapterfluidfortsatz einstückig ausgebildet. Unter "einstückig" soll insbesondere in einem Stück geformt verstanden werden. Vorzugsweise wird dieses eine Stück aus einem einzelnen Rohling, einer Masse und/oder einem Guss, besonders bevorzugt in einem Spritzgussverfahren, insbesondere einem Ein- und/oder Mehrkomponenten-Spritzgussverfahren, hergestellt.

Vorzugsweise weist der Connectorgrundkörper eine Längsachse auf, welche abgewinkelt ist zu einer Längsachse des Connectorfluidfortsatzes. Bevorzugt ist die Verbindungsausnehmung ein Bereich im Inneren des Connectorgrundkörpers, welcher durch eine Verbindungsöffnung auf einer dem Connectorfluidfortsatz abgewandten Seite in gedachten Geraden parallel zur Längsachse des Adaptergrundkörpers erreichbar ist. Vorzugsweise ist die Verbindungsausnehmung auf eine Erstreckung begrenzt, welche nach Volumen maximal 20%, bevorzugt maximal 10%, größer ist als der Adapterfluidfortsatz.

Durch die erfindungsgemäße Ausgestaltung der Wischervorrichtung kann eine vorteilhafte Handhabbarkeit eines Wischblattwechsels erreicht werden. Insbesondere kann ein vorteilhaft unkompliziertes Lösen eines Fluidanschlusses des Wischblatts erreicht werden. Insbesondere kann ein vorteilhaft unkompliziertes Anschließen eines Fluidanschlusses des Wischblatts erreicht werden.

Erfindungsgemäß wird vorgeschlagen, dass der zumindest eine Adapterfluidfortsatz an einer einer Wischlippenseite des zumindest einen Wischblattadapters zugewandten Seite zumindest ein Bartelement zu der Rastverbindung des zumindest einen Wischblattadapters mit dem zumindest einen Connectorelement aufweist. Vorzugsweise ist der Adapterfluidfortsatz durch das Bartelement schlüsselförmig, insbesondere schlagschlüsselförmig, ausgebildet. Vorzugsweise erstreckt sich das Bartelement zumindest teilweise in eine Richtung zumindest im Wesentlichen senkrecht zur Längsachse des Adapterfluidfortsatzes. Vorzugsweise erstreckt sich das Bartelement an einem dem Adaptergrundkörper abgewandten Koppelende des Adapterfluidfortsatzes zumindest teilweise weiter in eine Richtung zumindest im Wesentlichen senkrecht zur Längsachse des Adapterfluidfortsatzes als in einem Bereich zwischen dem Koppelende und einem dem Adaptergrundkörper zugewandten Ende des Adapterfluidfortsatzes zu einem Ausbilden eines Einhakelements. Vorzugsweise ist das zumindest eine Bartelement teilweise als ein Einhakvorsprung ausgebildet, welcher eine Längsachse aufweist, welche zumindest im Wesentlichen senkrecht zur Längsachse des Adapterfluidfortsatzes ausgerichtet ist. Vorzugsweise ist eine Wischlippenseite des Wischblattadapters eine Seite des Wischblattadapters, an welcher der Wischblattadapter, bevorzugt der zumindest eine Adaptergrundkörper zumindest eine Federschienenaufnahme, bevorzugt zumindest eine Nut zu einer Aufnahme zumindest einer Federschiene, aufweist. Der Ausdruck "im Wesentlichen senkrecht" soll hier insbesondere eine Ausrichtung einer Richtung relativ zu einer Bezugsrichtung definieren, wobei die Richtung und die Bezugsrichtung, insbesondere in einer Projektionsebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist. Unter "im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Es kann eine vorteilhafte Verrastung des Connectorelements an dem Adapterfluidfortsatz erreicht werden. Insbesondere kann eine eindeutig erreichbare Steckverbindung des Connectorelements mit dem Adapterfluidfortsatz erreicht werden.

Ferner wird vorgeschlagen, dass das zumindest eine Connectorelement zumindest einen Rasthaken zu der Rastverbindung des zumindest einen Wischblattadapters mit dem zumindest einen Connectorelement aufweist. Vorzugsweise weist der zumindest eine Rasthaken eine Längsachse auf, welche insbesondere zumindest im Wesentlichen parallel zu der Längsachse des Connectorgrundkörpers ausgerichtet ist. Vorzugsweise ist die Längsachse des zumindest einen Rasthakens zumindest im Wesentlichen parallel zu der Längsachse des Adapterfluidfortsatzes ausgerichtet in einem verbundenen Zustand des zumindest einen Connectorelements mit dem Wischblattadapter. Vorzugsweise ist die Längsachse des zumindest einen Rasthakens abgewinkelt zu der Längsachse des Connectorfluidfortsatzes ausgerichtet. Vorzugsweise ist der zumindest eine Rasthaken dazu vorgesehen, insbesondere geformt, mit dem zumindest einen Bartelement, insbesondere dem zumindest einen Einhakelement, des Adapterfluidfortsatzes zu verrasten. Vorzugsweise ist der zumindest eine Rasthaken dazu ausgebildet, zumindest teilweise elastisch ausgelenkt zu werden, insbesondere in eine Richtung zumindest im Wesentlichen senkrecht zu der Längsachse des zumindest einen Connectorgrundkörpers. Vorzugsweise ist das zumindest eine Connectorelement von dem Connectorgrundkörper, dem Connectorfluidfortsatz und dem Rasthaken gebildet. Vorzugsweise sind der zumindest eine Connectorgrundkörper, der zumindest eine Connectorfluidfortsatz und der zumindest eine Rasthaken einstückig ausgebildet. Vorzugsweise ist ein freies Ende des zumindest einen Rasthakens an einem dem zumindest einen Connectorfluidfortsatz abgewandten Ende des zumindest einen Connectorgrundkörpers angeordnet. Vorzugsweise ist der zumindest eine Rasthaken an einem dem zumindest einen Connectorfluidfortsatz zugewandten Ende des zumindest einen Connectorgrundkörpers mit dem zumindest einen Connectorgrundkörper verbunden. Vorzugsweise ist der zumindest eine Rasthaken an einer Wischlippenseite des Connectorelements angeordnet. Vorzugsweise ist die Wischlippenseite des Connectorelements eine Seite des Connectorelements, welche in einem verbundenen Zustand des zumindest einen Connectorelements mit dem zumindest einen Wischblattadapter einer Wischlippe zugewandt ausgerichtet ist und welche insbesondere von einer Steckseite verschieden ausgebildet ist. Es kann eine vorteilhafte Steck- und Rastverbindung des Connectorelements mit dem Wischblattadapter erreicht werden.

Des Weiteren wird vorgeschlagen, dass die zumindest eine Verbindungsausnehmung auf einer dem zumindest einen Connectorfluidfortsatz abgewandten Seite, insbesondere einer Steckseite, des zumindest einen Connectorelements eine Verbindungsöffnung mit einer profilzylinderförmigen Außenkontur aufweist. Vorzugsweise ist die Verbindungsöffnung in einem Querschnitt, insbesondere durch den Connectorgrundkörper, senkrecht zur Längsachse des Connectorgrundkörpers von dem Connectorgrundkörper auf die profilzylinderförmige Außenkontur begrenzt. Vorzugsweise ist die dem zumindest einen Connectorfluidfortsatz abgewandte Seite des Connectorelements, insbesondere des Connectorgrundkörpers die Steckseite, von welcher insbesondere der zumindest eine Adapterfluidfortsatz in die zumindest eine Verbindungsausnehmung steckverbindbar ist. Vorzugsweise ist die profilzylinderförmige Außenkontur von einem Kreisrundbereich und einem Rechteckbereich gebildet. Es kann eine vorteilhafte poka-yoke, insbesondere unkomplizierte, bevorzugt eindeutig erreichbare, Verbindung des Adapterfluidfortsatzes mit dem Connectorelement an der Verbindungsausnehmung erreicht werden.

Ferner wird vorgeschlagen, dass das zumindest eine Connectorelement zumindest ein Dichtelement aufweist, welches in der zumindest einen Verbindungsausnehmung angeordnet ist. Vorzugsweise ist das Dichtelement an einem Fluidkanaleingang zu dem Fluidkanal in dem Connectorelement in der Verbindungsausnehmung angeordnet. Vorzugsweise ist das zumindest eine Dichtelement mit dem zumindest einen Connectorelement, insbesondere dem zumindest einen Connectorgrundkörper, verbunden, insbesondere verklebt. Vorzugsweise ist das zumindest eine Dichtelement in dem verbundenen Zustand des Adapterfluidfortsatzes mit dem zumindest einen Connectorelement in einem Kontakt zu dem zumindest einen Adapterfluidfortsatz zwischen dem zumindest einen Adapterfluidfortsatz und dem zumindest einen Fluidkanal in dem zumindest einen Connectorelement angeordnet. Es kann eine vorteilhaft fluidisch dichte Verbindung des zumindest einen Wischblattadapters mit dem zumindest einen Connectorelement erreicht werden.

Des Weiteren wird vorgeschlagen, dass der zumindest eine Connectorfluidfortsatz eine Anschlussrichtung aufweist, welche zu einer Verbindungsrichtung der zumindest einen Verbindungsausnehmung abgewinkelt ausgerichtet ist. Vorzugsweise ist die Längsachse des zumindest einen Connectorfluidfortsatzes, insbesondere die Anschlussrichtung des zumindest einen Connectorfluidfortsatzes, zumindest 10°, bevorzugt zumindest 15°, besonders bevorzugt zumindest 25°, zu der Verbindungsrichtung der zumindest einen Verbindungsausnehmung, insbesondere zu der Längsachse des zumindest einen Connectorgrundkörpers, abgewinkelt ausgerichtet. Vorzugsweise ist die Längsachse des zumindest einen Connectorfluidfortsatzes, insbesondere die Anschlussrichtung des zumindest einen Connectorfluidfortsatzes, maximal 60°, bevorzugt maximal 45°, besonders bevorzugt maximal 35°, zu der Verbindungsrichtung der zumindest einen Verbindungsausnehmung, insbesondere zu der Längsachse des zumindest einen Connectorgrundkörpers, abgewinkelt ausgerichtet. Es kann eine vorteilhaft abgewinkelte Überbrückung für eine Fluidleitung von der Fluidzuleitung zu dem Wischblattadapter erreicht werden.

Ferner wird vorgeschlagen, dass die Wischervorrichtung zumindest ein Abdeckelement zu einem Abdecken des zumindest einen Connectorelements aufweist, welches mit dem zumindest einen Connectorelement beweglich verbunden ist. Vorzugsweise umgreift das zumindest eine Abdeckelement das zumindest eine Connectorelement teilweise. Vorzugsweise ist das zumindest eine Abdeckelement mit dem zumindest einen Connectorelement zumindest teilweise verrastet. Vorzugsweise deckt das zumindest eine Abdeckelement das zumindest eine Connectorelement an einer der Wischlippenseite des Connectorelements abgewandten Seite vollständig ab. Vorzugsweise deckt das zumindest eine Abdeckelement das zumindest eine Connectorelement an der Wischlippenseite des Connectorelements teilweise ab. Es kann ein vorteilhaft geschütztes Connectorelement erreicht werden.

Des Weiteren wird vorgeschlagen, dass das zumindest eine Abdeckelement, bevorzugt bis auf eine Abweichung von maximal 35°, entlang einer Längsachse des zumindest einen Connectorelements, bevorzugt entlang einer Längsachse des Connectorgrundkörpers, verschiebbar mit dem zumindest einen Connectorelement verbunden ist. Vorzugsweise ist das zumindest eine Abdeckelement zumindest um 10%, bevorzugt um zumindest 25%, einer Erstreckung des zumindest einen Connectorelements entlang der Längsachse des zumindest einen Connectorelements gegenüber dem zumindest einen Connectorelement verschiebbar mit dem Connectorelement verbunden. Vorzugsweise ist das zumindest eine Abdeckelement um maximal 40%, bevorzugt um maximal 30%, einer Erstreckung des zumindest einen Connectorelements entlang der Längsachse des zumindest einen Connectorelements gegenüber dem zumindest einen Connectorelement verschiebbar mit dem Connectorelement verbunden. Es kann eine vorteilhafte Verschiebung des Abdeckelements bei einem Wechseln des zumindest einen Connectorelements erreicht werden. Insbesondere kann eine vorteilhafte Zugänglichkeit des zumindest einen Connectorelements erreicht werden.

Ferner wird vorgeschlagen, dass das zumindest eine Abdeckelement zumindest ein nach Innen gerichtetes Pinelement aufweist, welches dazu ausgebildet ist, die Rastverbindung zwischen zumindest einem Adaptergrundkörper und dem zumindest einen Connectorelement zu lösen. Vorzugsweise weist das zumindest eine Pinelement eine abgeschrägte Oberfläche auf, welche dazu vorgesehen ist, den zumindest einen Rasthaken bei einem Verschieben des zumindest einen Abdeckelements elastisch auszulenken, insbesondere senkrecht zu einer Löserichtung, zu einem Lösen der Rastverbindung zwischen dem Connectorelement und dem Adaptergrundkörper. Vorzugsweise ist das zumindest eine Pinelement an einer Wischlippenseite des zumindest einen Abdeckelements angeordnet. Vorzugsweise weist das zumindest eine Abdeckelement in einem Querschnitt senkrecht zu einer Längsachse des Abdeckelements eine im Wesentlichen U-förmige Form auf. Vorzugsweise ist die Wischlippenseite eine einer offenen Seite der U-förmigen Form entsprechende Seite des zumindest einen Abdeckelements. Es kann eine vorteilhafte unkompliziert lösbare Rastverbindung des zumindest einen Connectorelements mit dem zumindest einen Wischblattadapter, insbesondere dem zumindest einen Adaptergrundkörper, erreicht werden.

Des Weiteren wird vorgeschlagen, dass das zumindest eine Abdeckelement zumindest eine Fluidverbindungsausnehmung aufweist, durch welche die zumindest eine Fluidzuleitung mit dem zumindest einen Connectorfluidfortsatz verbindbar ist. Vorzugsweise weist das zumindest eine Abdeckelement an einer einer seitlichen Seite der U-förmigen Form entsprechenden Seite des zumindest einen Abdeckelements die zumindest eine Fluidverbindungsausnehmung auf. Es kann eine vorteilhafte Erreichbarkeit des Connectorfluidfortsatzes in dem Abdeckelement erreicht werden.

Darüber hinaus wird ein Connectorelement einer erfindungsgemäßen Wischervorrichtung vorgeschlagen. Es kann ein vorteilhaft unkompliziertes Wechseln eines Wischblatts mit fluidischem Anschluss erreicht werden.

Darüber hinaus wird ein Wischersystem mit einem Wischarm und mit einer erfindungsgemäßen Wischervorrichtung vorgeschlagen. Vorzugsweise ist die Fluidzuleitung zumindest abschnittsweise mit dem Wischarm verbunden, beispielsweise an den Wischarm geklippt, gezurrt und/oder geklebt. Vorzugsweise ist die Fluidzuleitung an einem dem Wischblattadapter zugewandten Ende des Wischarms frei, insbesondere unverbunden mit dem Wischarm, ausgebildet. Vorzugsweise umfasst das Wischersystem einen Wischarmadapter. Vorzugsweise ist der Wischarmadapter einstückig mit dem Wischarm ausgebildet. Vorzugsweise umfasst das Wischersystem das Wischblatt. Es kann eine vorteilhafte Kompatibilität des Wischarms, insbesondere des Wischarmadapters, mit dem Wischblatt, insbesondere mit dem Wischblattadapter, erreicht werden.

Die erfindungsgemäße Wischervorrichtung, das erfindungsgemäße Connectorelement und/oder das erfindungsgemäße Wischersystem sollen/soll hierbei nicht auf die oben beschriebene Anwendung und Ausführungsform beschränkt sein. Insbesondere können/kann die erfindungsgemäße Wischervorrichtung, das erfindungsgemäße Connectorelement und/oder das erfindungsgemäße Wischersystem zu einer Erfüllung einer hierin beschriebenen Funktionsweise eine von einer hierin genannten Anzahl von einzelnen Elementen, Bauteilen und Einheiten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein erfindungsgemäßes Wischersystem mit einer erfindungsgemäßen Wischervorrichtung in einer schematischen Darstellung,
- Fig. 2: einen Wischblattadapter der erfindungsgemäßen Wischervorrichtung in einer schematischen Darstellung,
- Fig. 3: ein Connectorelement der erfindungsgemäßen Wischervorrichtung in einer schematischen Darstellung,
- Fig. 4: den Wischblattadapter und das Connectorelement der erfindungsgemäßen Wischervorrichtung in einem verbundenen Zustand in einer schematischen Darstellung,
- Fig. 5: ein Abdeckelement und das Connectorelement der erfindungsgemäßen Wischervorrichtung in einem verbundenen Zustand in einer schematischen Darstellung,
- Fig. 6: das Abdeckelement der erfindungsgemäßen Wischervorrichtung in einer schematischen Darstellung und
- Fig. 7: den Wischblattadapter, das Abdeckelement und das Connectorelement in einem verbundenen Zustand der erfindungsgemäßen Wischervorrichtung in einer schematischen Darstellung.

### Beschreibung des Ausführungsbeispiels

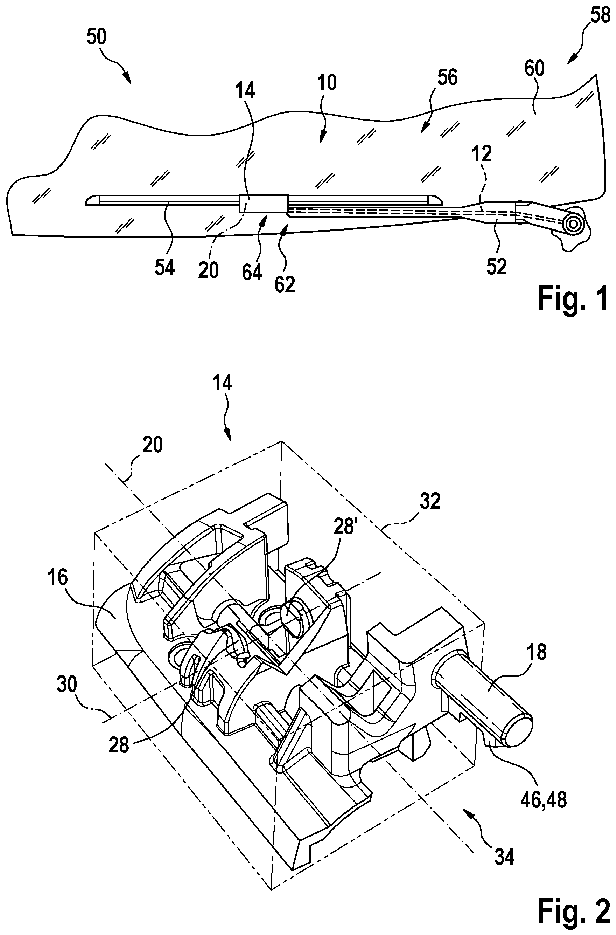

Figur 1 zeigt ein Wischersystem 50. Das Wischersystem 50 umfasst einen Wischarm 52. Das Wischersystem 50 umfasst einen Wischarm 52. Das Wischersystem 50 ist zum Großteil von dem Wischarm 52 und einem Wischblatt 54 gebildet. Das Wischersystem 50 umfasst das Wischblatt 54. Das Wischersystem 50 umfasst eine Wischervorrichtung 10. Die Wischervorrichtung 10 ist ein Teil eines Scheibenwischers 56. Die Wischervorrichtung 10 ist zu einem Einsatz an einem Fahrzeug 58 vorgesehen. Die Wischervorrichtung 10 ist als Teil des Scheibenwischers 56 zu einer Reinigung einer Scheibe 60 an dem Fahrzeug 58 vorgesehen.

Die Wischervorrichtung 10 umfasst eine Fluidzuleitung 12. Die Fluidzuleitung 12 ist zu einer Versorgung eines Wischblattadapters 14 mit einem Wischfluid vorgesehen. Die Fluidzuleitung 12 ist abschnittsweise an den Wischarm 52 geklippt. An einem dem Wischblatt 54 zugewandten Ende 62 des Wischarms 52 ist die Fluidzuleitung 12 frei, insbesondere abschnittsweise unverbunden mit dem Wischarm 52, ausgebildet.

Die Fluidzuleitung 12 ist als ein Schlauch ausgebildet. Die Fluidzuleitung 12 ist mit einem Fluidreservoir, insbesondere einem Wischflüssigkeitsreservoir, des Fahrzeugs 58 verbunden. Die Fluidzuleitung 12 ist aus einem einzigen Material ausgebildet. Die Fluidzuleitung 12 weist ein Reservoirende auf, welches mit dem Fluidreservoir verbunden ist. Die Fluidzuleitung 12 ist frei von von dem Schlauch verschiedenen Bauteilen ausgebildet.

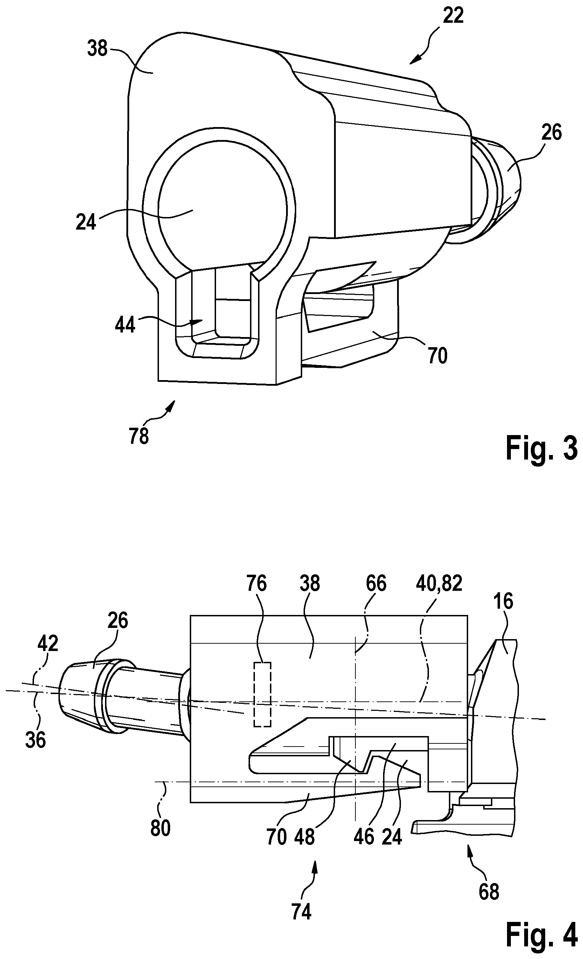

Das Wischersystem 50 umfasst einen Wischarmadapter 64. Der Wischarmadapter 64 ist einstückig mit dem Wischarm 52 ausgebildet. Die Wischervorrichtung 10 umfasst den Wischblattadapter 14. Der Wischblattadapter 14 umfasst einen Adaptergrundkörper 16. Der Adaptergrundkörper 16 weist einen Adapterfluidfortsatz 18 auf. Der Adapterfluidfortsatz 18, insbesondere eine Längsachse 82 des Adapterfluidfortsatzes 18, erstreckt sich entlang einer Längsachse 20 des Wischblattadapters 14 (vgl. Fig. 2 und Fig. 4).

Der Wischblattadapter 14 ist dazu ausgebildet, mit dem Wischarm 52, insbesondere mit dem Wischarmadapter 64, schwenkbar verbunden zu werden. Der Wischblattadapter 14, bevorzugt der Adaptergrundkörper 16, ist dazu ausgebildet, mit dem Wischarmadapter 64, insbesondere dem Wischarm 52, schwenkbar zu verrasten. Der Adaptergrundkörper 16 weist zwei mechanische Verbindungselemente 28, 28' zu einer schwenkbaren Verbindung mit dem Wischarm 52, insbesondere dem Wischarmadapter 64, auf. Die zwei Verbindungselemente 28, 28' sind sich auf einer gedachten Schwenkachse 30 gegenüberliegend und einander zugewandt angeordnet. Der Wischblattadapter 14, insbesondere der Adaptergrundkörper 16, ist frei von einem elektrischen Verbindungselement ausgebildet.

Der Adaptergrundkörper 16 umfasst, insbesondere begrenzt, zwei Fluidkanäle, insbesondere in seinem Inneren. Der Adaptergrundkörper 16 weist an einer Außenseite 34 den Adapterfluidfortsatz 18 auf, welcher die Fluidkanäle von der Außenseite 34 aus zugänglich ausbildet. Der Adapterfluidfortsatz 18 ist an einer Außenseite 34 des Adaptergrundkörpers 16 angeordnet, welche zumindest im Wesentlichen senkrecht zu der Längsachse 20 des Adaptergrundkörpers 16 ausgerichtet ist, insbesondere in Bezug auf einen kleinsten gedachten Quader 32, welcher den Adaptergrundkörper 16 gerade noch umschließt. Der Adapterfluidfortsatz 18 ist an der Außenseite 34 des Adaptergrundkörpers 16 angeordnet, welche ein Ende des Adaptergrundkörpers 16 entlang der Längsachse 20 des Adaptergrundkörpers 16 bildet.

Die Wischervorrichtung 10 umfasst ein Connectorelement 22 zu einer Rastverbindung mit dem Adaptergrundkörper 16 an dem zumindest einen Adapterfluidfortsatz 18 (vgl. Fig. 3 und Fig. 4). Das Connectorelement 22 weist eine Verbindungsausnehmung 24 zu einer Fluidverbindung mit dem zumindest einen Adapterfluidfortsatz 18 auf. Das Connectorelement 22 begrenzt die Verbindungsausnehmung 24. Das Connectorelement 22 weist einen Connectorfluidfortsatz 26 zu einer Verbindung mit der zumindest einen Fluidzuleitung 12 auf. Die Fluidzuleitung 12 weist ein Wischblattende auf, welches dazu vorgesehen ist, mit dem Connectorfluidfortsatz 26 verbunden zu werden. Das Fluidreservoir ist durch die Fluidzuleitung 12 und das Connectorelement 22 mit dem Wischblattadapter 14, insbesondere dem Wischblatt 54, fluidisch verbunden. Das Connectorelement 22 weist einen Connectorgrundkörper 38 auf. Der Connectorgrundkörper 38 begrenzt die Verbindungsausnehmung 24. Der Connectorgrundkörper 38 und der Adapterfluidfortsatz 18 sind einstückig ausgebildet. Das Connectorelement 22 weist eine Längsachse 36 auf (vgl. Fig. 4). Die Verbindungsausnehmung 24 und der Adapterfluidfortsatz 18 sind an verschiedenen Enden des Connectorelements 22 entlang der Längsachse 36 des Connectorelements 22 angeordnet.

Das Connectorelement 22 ist zu der Rastverbindung mit dem Adapterfluidfortsatz 18 ausgebildet. Das Connectorelement 22 ist dazu ausgebildet, insbesondere speziell dazu geformt, mit der Verbindungsausnehmung 24 auf den Adapterfluidfortsatz 18 gesteckt zu werden zu der Rastverbindung des Connectorelements 22 mit dem Adaptergrundkörper 16. Das Connectorelement 22 begrenzt in seinem Inneren einen Fluidkanal, welcher sich von der Verbindungsausnehmung 24 durch den zumindest einen Connectorfluidfortsatz 26 erstreckt.

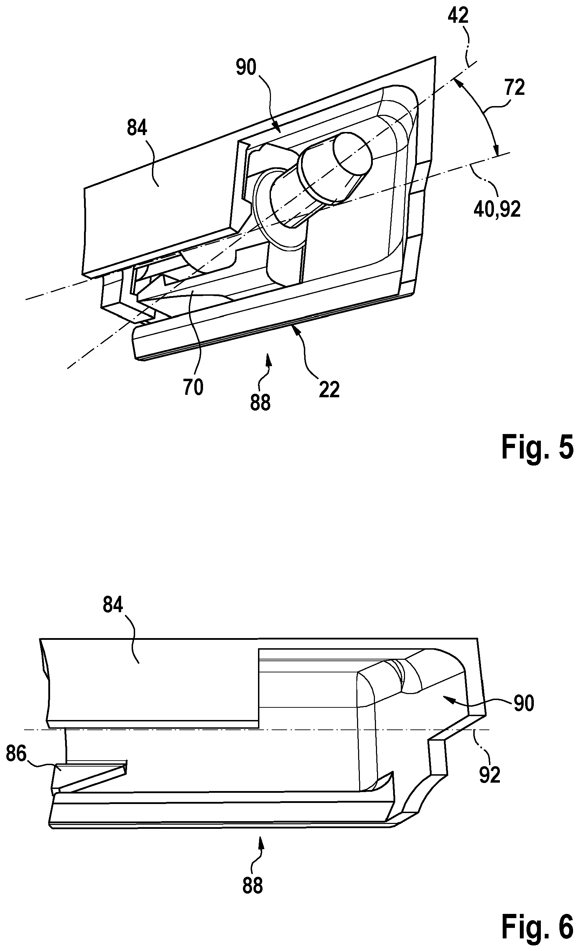

Der Connectorgrundkörper 38 weist eine Längsachse 40 auf, welche abgewinkelt ist zu einer Längsachse 42 des Connectorfluidfortsatzes 26. Die Verbindungsausnehmung 24 ist ein Bereich im Inneren des Connectorgrundkörpers 38, welcher durch eine Verbindungsöffnung 44 auf einer dem Connectorfluidfortsatz 26 abgewandten Seite in gedachten Geraden parallel zur Längsachse 40 des Connectorgrundkörpers 38 erreichbar ist (vgl. Fig. 3 und Fig. 5). Die Verbindungsausnehmung 24 ist auf eine Erstreckung begrenzt, welche nach Volumen maximal 20% größer ist als der Adapterfluidfortsatz 18.

Der Connectorfluidfortsatz 26 weist eine Anschlussrichtung auf, welche zu einer Verbindungsrichtung der zumindest einen Verbindungsausnehmung 24 abgewinkelt ausgerichtet ist. Die Längsachse 42 des Connectorfluidfortsatzes 26, insbesondere die Anschlussrichtung des Connectorfluidfortsatzes 26, ist in einem Winkel 72 von zumindest 25° zu der Verbindungsrichtung der zumindest einen Verbindungsausnehmung 24, insbesondere zu der Längsachse 40 des zumindest einen Connectorgrundkörpers 38, abgewinkelt ausgerichtet (vgl. Fig. 5). Die Längsachse 42 des Connectorfluidfortsatzes 26, insbesondere die Anschlussrichtung des Connectorfluidfortsatzes 26, ist in einem Winkel 72 von maximal 45° zu der Verbindungsrichtung der zumindest einen Verbindungsausnehmung 24, insbesondere zu der Längsachse 40 des Connectorgrundkörpers 38, abgewinkelt ausgerichtet.

Der Adapterfluidfortsatz 18 weist an einer einer Wischlippenseite 68 des Wischblattadapters 14 zugewandten Seite ein Bartelement 46, analog zu einem Schlüsselbartelement, auf zu der Rastverbindung des Wischblattadapters 14 mit dem Connectorelement 22 (vgl. Fig. 2 und Fig. 4). Die Wischlippenseite 68 des Wischblattadapters 14 ist eine Seite des Wischblattadapters 14, an welcher der Wischblattadapter 14, bevorzugt der Adaptergrundkörper 16, eine Federschienenaufnahme aufweist. Der Adapterfluidfortsatz 18 ist durch das Bartelement 46 schlüsselförmig, insbesondere schlagschlüsselförmig, ausgebildet. Das Bartelement 46 erstreckt sich teilweise in eine Richtung zumindest im Wesentlichen senkrecht zur Längsachse 82 des Adapterfluidfortsatzes 18.

Das Bartelement 46 erstreckt sich an einem dem Adaptergrundkörper 16 abgewandten Koppelende des Adapterfluidfortsatzes 18 zumindest teilweise weiter in eine Richtung senkrecht zur Längsachse 82 des Adapterfluidfortsatzes 18 als in einem Bereich zwischen dem Koppelende und einem dem Adaptergrundkörper 16 zugewandten Ende des Adapterfluidfortsatzes 18 zu einem Ausbilden eines Einhakelements 48. Das Bartelement 46 ist teilweise als ein Einhakvorsprung, insbesondere als das Einhakelement 48, ausgebildet. Das Einhakelement 48 weist eine Längsachse 66 auf, welche senkrecht zur Längsachse 82 des Adapterfluidfortsatzes 18 ausgerichtet ist.

Das Connectorelement 22 weist einen Rasthaken 70 zu der Rastverbindung des Wischblattadapters 14 mit dem Connectorelement 22 auf. Der Rasthaken 70 weist eine Längsachse 80 auf, welche parallel zu der Längsachse 40 des Connectorgrundkörpers 38 ausgerichtet ist. Die Längsachse 80 des Rasthakens 70 ist bis auf Abweichungen von maximal 25° zu der Längsachse 82 des Adapterfluidfortsatzes 18 ausgerichtet in einem verbundenen Zustand des zumindest einen Connectorelements 22 mit dem Wischblattadapter 14. Die Längsachse 80 des Rasthakens 70 ist abgewinkelt zu der Längsachse 42 des Connectorfluidfortsatzes 26 ausgerichtet. Der Rasthaken 70 ist dazu vorgesehen, insbesondere geformt, mit dem Bartelement 46, insbesondere dem Einhakelement 48, des Adapterfluidfortsatzes 18 zu verrasten.

Der Rasthaken 70 ist dazu ausgebildet, zumindest teilweise elastisch ausgelenkt zu werden, insbesondere in eine Richtung senkrecht zu der Längsachse 40 des Connectorgrundkörpers 38. Das Connectorelement 22 ist von dem Connectorgrundkörper 38, dem Connectorfluidfortsatz 26 und dem Rasthaken 70 gebildet. Der Connectorgrundkörper 38, der Connectorfluidfortsatz 26 und der Rasthaken 70 sind einstückig ausgebildet. Ein freies Ende des Rasthakens 70 ist an einem dem Connectorfluidfortsatz 26 abgewandten Ende des Connectorgrundkörpers 38 angeordnet. Der Rasthaken 70 ist an einem dem Connectorfluidfortsatz 26 zugewandten Ende des Connectorgrundkörpers 38 mit dem Connectorgrundkörper 38 verbunden.

Der Rasthaken 70 ist an einer Wischlippenseite 74 des Connectorelements 22 angeordnet. Die Wischlippenseite 74 des Connectorelements 22 ist eine Seite des Connectorelements 22, welche in einem verbundenen Zustand des Connectorelements 22 mit dem Wischblattadapter 14 einer Wischlippe zugewandt ausgerichtet ist und welche von einer Steckseite 78 verschieden ausgebildet ist. Die Verbindungsöffnung 44 ist an der Steckseite 78 angeordnet (vgl. Fig. 3).

Die Verbindungsausnehmung 24 weist auf einer dem Connectorfluidfortsatz 26 abgewandten Seite, insbesondere der Steckseite 78, des Connectorelements 22 die Verbindungsöffnung 44 mit einer profilzylinderförmigen Außenkontur auf. Die Verbindungsöffnung 44 ist in einem Querschnitt, insbesondere durch den Connectorgrundkörper 38, senkrecht zur Längsachse 40 des Connectorgrundkörpers 38 von dem Connectorgrundkörper 38 auf die profilzylinderförmige Außenkontur begrenzt (vgl. Fig. 3).

Die dem Connectorfluidfortsatz 26 abgewandte Seite des Connectorelements 22, insbesondere des Connectorgrundkörpers 38, ist die Steckseite 78, von welcher aus insbesondere der Adapterfluidfortsatz 18 in die zumindest eine Verbindungsausnehmung 24 steckverbindbar ist. Die profilzylinderförmige Außenkontur der Verbindungsöffnung 44 ist von einem Kreisrundbereich und einem Rechteckbereich gebildet.

Das Connectorelement 22 weist ein Dichtelement 76 auf. Das Dichtelement 76 ist in der Verbindungsausnehmung 24 angeordnet (schematisch in Fig. 4 angedeutet). Das Dichtelement 76 ist an einem Fluidkanaleingang zu dem Fluidkanal in dem Connectorelement 22 in der Verbindungsausnehmung 24 angeordnet. Das Dichtelement 76 ist mit dem Connectorelement 22, insbesondere dem Connectorgrundkörper 38, verbunden. Das Dichtelement 76 ist in dem verbundenen Zustand des Adapterfluidfortsatzes 18 mit dem Connectorelement 22 in einem Kontakt zu dem Adapterfluidfortsatz 18 zwischen dem Adapterfluidfortsatz 18 und dem Fluidkanal, insbesondere dem Connectorgrundkörper 38, in dem Connectorelement 22, insbesondere in der Verbindungsausnehmung 24, angeordnet.

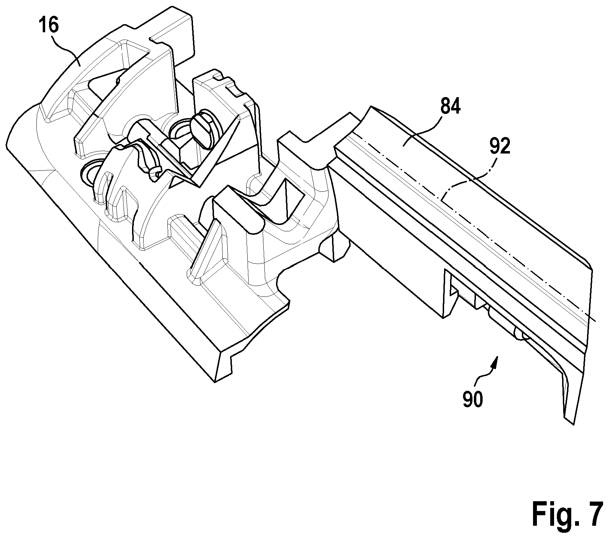

Die Wischervorrichtung 10 weist ein Abdeckelement 84 auf zu einem Abdecken des Connectorelements 22 (vgl. Fig. 5, Fig. 6 und Fig. 7). Das Abdeckelement 84 ist mit dem Connectorelement 22 beweglich verbunden. Das Abdeckelement 84 umgreift das Connectorelement 22 teilweise. Das Abdeckelement 84 ist mit dem Connectorelement 22 verrastet. Das Abdeckelement 84 deckt das Connectorelement 22 an einer der Wischlippenseite 74 des Connectorelements 22 abgewandten Seite vollständig ab. Das Abdeckelement 84 deckt das Connectorelement 22 an der Wischlippenseite 74 des Connectorelements 22 teilweise ab.

Das Abdeckelement 84 ist, bis auf eine Abweichung von maximal 35°, entlang der Längsachse 36 des zumindest einen Connectorelements 22, insbesondere der Längsachse 40 des Connectorgrundkörpers 38, verschiebbar mit dem Connectorelement 22 verbunden ist. Das Abdeckelement 84 ist zumindest um 10% entlang einer Erstreckung des Connectorelements 22 entlang der Längsachse 36 des Connectorelements 22, insbesondere der Längsachse 40 des Connectorgrundkörpers 38, gegenüber dem Connectorelement 22 verschiebbar mit dem Connectorelement 22 verbunden. Das Abdeckelement 84 ist um maximal 30% einer Erstreckung des Connectorelements 22 entlang der Längsachse 36 des Connectorelements 22, insbesondere der Längsachse 40 des Connectorgrundkörpers 38, gegenüber dem Connectorelement 22 verschiebbar mit dem Connectorelement 22 verbunden.

Das Abdeckelement 84 weist ein nach innen gerichtetes Pinelement 86 auf. Das Pinelement 86 ist dazu ausgebildet, die Rastverbindung zwischen dem Adaptergrundkörper 16 und dem Connectorelement 22 zu lösen. Das Pinelement 86 weist eine abgeschrägte Oberfläche auf, welche dazu vorgesehen ist, den Rasthaken 70 bei einem Verschieben des zumindest einen Abdeckelements 84 elastisch auszulenken zu einem Lösen der Rastverbindung zwischen dem Connectorelement 22 und dem Adaptergrundkörper 16. Das Pinelement 86 ist an einer Wischlippenseite 88 des zumindest einen Abdeckelements 84 angeordnet. Das Abdeckelement 84 weist in einem Querschnitt senkrecht zu einer Längsachse 92 des Abdeckelements 84 eine im Wesentlichen U-förmige Form auf. Die Wischlippenseite 88 des Abdeckelements 84 ist eine einer offenen Seite der U-förmigen Form entsprechende Seite des Abdeckelements 84. Das Pinelement 86 weist die, insbesondere gegenüber einer Längsachse 92 des Abdeckelements 84, abgeschrägte Oberfläche an einer der Wischlippenseite 88 des Abdeckelements 84 zugewandten Seite auf.

Das Abdeckelement 84 weist eine Fluidverbindungsausnehmung 90 auf. Durch die Fluidverbindungsausnehmung 90 ist die Fluidzuleitung 12 mit dem Connectorfluidfortsatz 26 verbindbar. Das Abdeckelement 84 weist an einer, einer seitlichen Seite der U-förmigen Form entsprechenden, Seite des zumindest einen Abdeckelements 84 die Fluidverbindungsausnehmung 90 auf.

## Patentansprüche

1. Wischervorrichtung mit zumindest einem Wischblattadapter (14), welcher zumindest einen Adaptergrundkörper (16) umfasst, welcher zumindest einen Adapterfluidfortsatz (18) aufweist, welcher sich entlang einer Längsachse (20) des Wischblattadapters (14) erstreckt, und mit zumindest einer Fluidzuleitung (12) zu einer Versorgung des Wischblattadapters (14) mit einem Wischfluid, wobei die Wischervorrichtung zumindest ein Connectorelement (22) zu einer Rastverbindung mit dem zumindest einen Adaptergrundkörper (16) an dem zumindest einen Adapterfluidfortsatz (18) aufweist, welches zumindest eine Verbindungsausnehmung (24) zu einer Fluidverbindung mit dem zumindest einen Adapterfluidfortsatz (18) aufweist und welches zumindest einen Connectorfluidfortsatz (26) zu einer Verbindung mit der zumindest einen Fluidzuleitung (12) aufweist **dadurch gekennzeichnet, dass** der zumindest eine Adapterfluidfortsatz (18) an einer einer Wischlippenseite (68) des zumindest einen Wischblattadapters (14) zugewandten Seite zumindest ein Bartelement (46) zu der Rastverbindung des zumindest einen Wischblattadapters (14) mit dem zumindest einen Connectorelement (22) aufweist.

2. Wischervorrichtung nach Anspruch 1, **dadurch gekennzeichnet, dass** das zumindest eine Connectorelement (22) zumindest einen Rasthaken (70) zu der Rastverbindung des zumindest einen Wischblattadapters (14) mit dem zumindest einen Connectorelement (22) aufweist.

3. Wischervorrichtung nach einem der vorhergehenden Ansprüche, **dadurch gekennzeichnet, dass** die zumindest eine Verbindungsausnehmung (24) auf einer dem zumindest einen Connectorfluidfortsatz (26) abgewandten Seite des zumindest einen Connectorelements (22) eine Verbindungsöffnung (44) mit einer profilzylinderförmigen Außenkontur aufweist.

4. Wischervorrichtung nach einem der vorhergehenden Ansprüche, **dadurch gekennzeichnet, dass** das zumindest eine Connectorelement (22) zumindest ein Dichtelement (76) aufweist, welches in der zumindest einen Verbindungsausnehmung (24) angeordnet ist.

5. Wischervorrichtung nach einem der vorhergehenden Ansprüche, **dadurch gekennzeichnet, dass** der zumindest eine Connectorfluidfortsatz (26) eine Anschlussrichtung aufweist, welche zu einer Verbindungsrichtung der zumindest einen Verbindungsausnehmung (24) abgewinkelt ausgerichtet ist.

6. Wischervorrichtung nach einem der vorhergehenden Ansprüche, **gekennzeichnet durch** zumindest ein Abdeckelement (84) zu einem Abdecken des zumindest einen Connectorelements (22), welches mit dem zumindest einen Connectorelement (22) beweglich verbunden ist.

7. Wischervorrichtung nach Anspruch 6, **dadurch gekennzeichnet, dass** das zumindest eine Abdeckelement (84) entlang einer Längsachse (36) des zumindest einen Connectorelements (22) verschiebbar mit dem zumindest einen Connectorelement (22) verbunden ist.

8. Wischervorrichtung zumindest nach Anspruch 6, **dadurch gekennzeichnet, dass** das zumindest eine Abdeckelement (84) zumindest ein nach innen gerichtetes Pinelement (86) aufweist, welches dazu ausgebildet ist, die Rastverbindung zwischen dem zumindest einen Adaptergrundkörper (16) und dem zumindest einen Connectorelement (22) zu lösen.

9. Wischervorrichtung zumindest nach Anspruch 5, **dadurch gekennzeichnet, dass** das zumindest eine Abdeckelement (84) zumindest eine Fluidverbindungsausnehmung (90) aufweist, durch welche die zumindest eine Fluidzuleitung (12) mit dem zumindest einen Connectorfluidfortsatz (26) verbindbar ist.

10. Wischersystem mit einem Wischarm (52) und mit einer Wischervorrichtung (10) nach einem der Ansprüche 1 bis 9.

## Claims

1. Wiper device having at least one wiper blade adapter (14), which comprises at least one adapter main body (16) which has at least one adapter fluid extension (18) extending along a longitudinal axis (20) of the wiper blade adapter (14), and having at least one fluid supply line (12) for supplying the wiper blade adapter (14) with a wiping fluid, wherein the wiper device has at least one connector element (22) for forming a latching connection to the at least one adapter main body (16) at the at least one adapter fluid extension (18), which connector element has at least one connection cutout (24) for forming a fluid connection to the at least one adapter fluid extension (18) and which has at least one connector fluid extension (26) for forming a connection to the at least one fluid supply line (12), **characterized in that**, on a side facing a wiping lip side (68) of the at least one wiper blade adapter (14), the at least one adapter fluid extension (18) has at least one barb element (46) for forming the latching connection of the at least one wiper blade adapter (14) to the at least one connector element (22).

2. Wiper device according to Claim 1, **characterized in that** the at least one connector element (22) has at least one latching hook (70) for forming the latching connection of the at least one wiper blade adapter (14) to the at least one connector element (22).

3. Wiper device according to either of the preceding claims, **characterized in that**, on a side of the at least one connector element (22) facing away from the at least one connector fluid extension (26), the at least one connection cutout (24) has a connection opening (44) having a cylindrically profiled outer contour.

4. Wiper device according to any one of the preceding claims, **characterized in that** the at least one connector element (22) has at least one sealing element (76) which is arranged in the at least one connection cutout (24).

5. Wiper device according to any one of the preceding claims, **characterized in that** the at least one connector fluid extension (26) has an attachment direction which is oriented at an angle to a connection direction of the at least one connection cutout (24).

6. Wiper device according to any one of the preceding claims, **characterized by** at least one covering element (84) for covering the at least one connector element (22), said covering element being movably connected to the at least one connector element (22).

7. Wiper device according to Claim 6, **characterized in that** the at least one covering element (84) is connected to the at least one connector element (22) so as to be displaceable along a longitudinal axis (36) of the at least one connector element (22).

8. Wiper device at least according to Claim 6, **characterized in that** the at least one covering element (84) has at least one inwardly directed pin element (86), which is designed to release the latching connection between the at least one adapter main body (16) and the at least one connector element (22).

9. Wiper device at least according to Claim 5, **characterized in that** the at least one covering element (84) has at least one fluid connection cutout (90), through which the at least one fluid supply line (12) is connectable to the at least one connector fluid extension (26).

10. Wiper system having a wiper arm (52) and having a wiper device (10) according to any one of Claims 1 to 9.

## Revendications

1. Dispositif d'essuie-glace doté d'au moins un adaptateur de balai d'essuieglace (14) qui comprend au moins un corps de base d'adaptateur (16) comportant au moins un embout pour fluide d'adaptateur (18), lequel s'étend suivant un axe longitudinal (20) de l'adaptateur de balai d'essuie-glace (14), et doté d'au moins une conduite d'alimentation en fluide (12) servant à alimenter l'adaptateur de balai d'essuie-glace (14) en fluide d'essuyage, le dispositif d'essuie-glace comportant au moins un élément connecteur (22) pour une liaison par encliquetage audit au moins un corps de base d'adaptateur (16) sur ledit au moins un embout pour fluide d'adaptateur (18), qui comporte au moins un évidement de liaison (24) servant à une liaison fluidique audit au moins un embout pour fluide d'adaptateur (18) et qui comporte au moins un embout pour fluide de connecteur (26) servant à une liaison à ladite au moins une conduite d'alimentation en fluide (12), **caractérisé en ce que** ledit au moins un embout pour fluide d'adaptateur (18) comporte, sur une face tournée vers une lame d'essuie-glace (68) dudit au moins un adaptateur de balai d'essuie-glace (14), au moins un élément de verrouillage (46) servant à la liaison par encliquetage dudit au moins un adaptateur de balai d'essuie-glace (14) audit au moins un élément connecteur (22).

2. Dispositif d'essuie-glace selon la revendication 1, **caractérisé en ce que** ledit au moins un élément connecteur (22) comporte au moins un crochet d'encliquetage (70) servant à la liaison par encliquetage dudit au moins un adaptateur de balai d'essuie-glace (14) audit au moins un élément connecteur (22).

3. Dispositif d'essuie-glace selon l'une quelconque des revendications précédentes, **caractérisé en ce que** ledit au moins un évidement de liaison (24) comporte une ouverture de liaison (44) présentant un contour extérieur profilé cylindrique sur un côté dudit au moins un élément connecteur (22) qui est tourné à l'opposé dudit au moins un embout pour fluide de connecteur (26).

4. Dispositif d'essuie-glace selon l'une quelconque des revendications précédentes, **caractérisé en ce que** l'élément connecteur (22) comporte au moins un élément d'étanchéité (76) qui est disposé dans ledit au moins un évidement de liaison (24).

5. Dispositif d'essuie-glace selon l'une quelconque des revendications précédentes, **caractérisé en ce que** ledit au moins un embout pour fluide de connecteur (26) présente un sens de raccordement qui est orienté de manière inclinée dans une direction de liaison dudit au moins un évidement de liaison (24).

6. Dispositif d'essuie-glace selon l'une quelconque des revendications précédentes, **caractérisé par** au moins un élément de recouvrement (84) servant à recouvrir ledit au moins un élément connecteur (22) et qui est relié de manière mobile audit au moins un élément connecteur (22).

7. Dispositif d'essuie-glace selon la revendication 6, **caractérisé en ce que** ledit au moins un élément de recouvrement (84) est relié de manière déplaçable audit au moins un élément connecteur (22) suivant un axe longitudinal (36) dudit au moins un élément connecteur (22).

8. Dispositif d'essuie-glace selon au moins la revendication 6, **caractérisé en ce que** ledit au moins un élément de recouvrement (84) comporte au moins un élément formant broche orienté vers l'intérieur (86) et qui est conçu pour interrompre la liaison entre ledit au moins un corps de base d'adaptateur (16) et ledit au moins un élément connecteur (22).

9. Dispositif d'essuie-glace selon au moins la revendication 5, **caractérisé en ce que** ledit au moins un élément de recouvrement (84) comporte au moins un évidement de liaison fluidique (90), par l'intermédiaire duquel ladite au moins une conduite d'alimentation en fluide (12) peut être reliée audit au moins un embout pour fluide de connecteur (26).

10. Système d'essuie-glace comprenant un balai d'essuie-glace (52) et un dispositif d'essuie-glace (10) selon l'une quelconque des revendications 1 à 9.
